# EUROPÄISCHE PATENTSCHRIFT

(11) **EP 3 695 244 B1**
(45) Veröffentlichungstag und Bekanntmachung des Hinweises auf die Patenterteilung: **23.08.2023**
(21) Anmeldenummer: 18782730.8
(22) Anmeldetag: 04.10.2018
(51) Int. Cl.: G01S 7/40, G01S 13/93

(54) **VERFAHREN UND VORRICHTUNG ZUM ERZEUGEN EINES INVERSEN SENSORMODELLS UND VERFAHREN ZUM ERKENNEN VON HINDERNISSEN**
METHOD AND DEVICE FOR CREATING AN INVERSE SENSOR MODEL AND METHOD FOR DETECTING OBSTACLES
PROCÉDÉ ET DISPOSITIF DE GÉNÉRATION D'UN MODÈLE DE CAPTEUR INVERSE ET PROCÉDÉ DE DÉTECTION D'OBSTACLES

(30) Priorität: 10.10.2017 DE 102017217972
(43) Veröffentlichungstag der Anmeldung: 19.08.2020
(73) Patentinhaber: Robert Bosch GmbH, 70442 Stuttgart (DE)
(72) Erfinder: GUSSNER, Thomas, 71634 Ludwigsburg (DE); LANG, Stefan, 71726 Benningen (DE)
(86) Internationale Anmeldenummer: PCT/EP2018/076986
(87) Internationale Veröffentlichungsnummer: WO 2019/072674

(56) Entgegenhaltungen:
- DE-A1-102009 007 395
- DE-A1-102009 007 395
- Carlos G?lvez ET AL: "Grid-Based Multi-Sensor Fusion for On-Road Obstacle Detection: Application to Autonomous Driving", , 1. Januar 2015 (2015-01-01), XP055356442, Gefunden im Internet: URL:https://www.diva-portal.org/smash/get/ diva2:852457/FULLTEXT01.pdf
- Sebastian Thrun: "Learning Occupancy Grid Maps with Forward Sensor Models", Autonomous Robots, 1. September 2003 (2003-09-01), Seiten 111-127, XP055335484, Boston DOI: 10.1023/A:1025584807625 Gefunden im Internet: URL:http://faculty.iiit.ac.in/~mkrishna/Th runOccGrid.pdf
- Sebastian Thrun: "Learning Occupancy Grid Maps with Forward Sensor Models", Autonomous Robots, 1 September 2003 (2003-09-01), pages 111-127, XP055335484, Boston Retrieved from the Internet: URL:http://faculty.iiit.ac.in/~mkrishna/Th runOccGrid.pdf
- Daniek Joubert ET AL: "Adaptive occupancy grid mapping with measurement and pose uncertainty", , 1 December 2012 (2012-12-01), XP055676698, Retrieved from the Internet: URL:http://appliedmaths.sun.ac.za/~wbrink/ students/DJoubert2012.pdf
- Tiana Rakotovao Andriamahefa: "Integer Occupancy Grids : a probabilistic multi-sensor fusion framework for embedded perception", , 21 February 2017 (2017-02-21), XP055615155, Retrieved from the Internet: URL:https://tel.archives-ouvertes.fr/tel-0 1680375/document

## Beschreibung

Die vorliegende Erfindung betrifft ein Verfahren und eine Vorrichtung zum Erzeugen eines inversen Sensormodells für eine Radarsensorvorrichtung. Weiter betrifft die Erfindung ein Verfahren zum Erkennen von Hindernissen in einem Umfeld eines Fahrzeugs mittels einer Radarsensorvorrichtung.

### Stand der Technik

Fahrerassistenzsysteme, welche teilautonomes oder autonomes Fahren ermöglichen, müssen über genaue Informationen über das Umfeld des Fahrzeugs verfügen können. Insbesondere müssen befahrbare Flächen bzw. Freiflächen in der Fahrzeugumgebung von nicht befahrbaren Bereichen unterschieden werden.

Zur Bestimmung von Freiflächen werden derzeit vorwiegend Videosensoren, Stereo-Videosensoren und Lidarsensoren eingesetzt. Insbesondere können die von diesen Sensoren generierten Sensordaten zur Erzeugung eines Belegungsgitters (Occupancy Grid) herangezogen werden. Hierzu wird das Umfeld des Fahrzeugs als eine üblicherweise zweidimensionale Gitterstruktur dargestellt, wobei jeder Zelle der Gitterstruktur ein Belegtheitswert zugeordnet wird. Der Belegtheitswert kann ein binärer Wert sein, welcher die Werte "frei" und "belegt" aufweist. Ebenfalls möglich ist die Verwendung ternärer Werte, wobei einer Zelle zusätzlich der Wert "unbekannt" zugeordnet werden kann.

Eine derartige Zuordnung ternärer Werte anhand von Sensordaten ist beispielsweise aus der Druckschrift DE 10 2009 007 395 B4 bekannt.

Moderne Fahrzeuge verfügen üblicherweise auch über eine Vielzahl von Radarsensoren, welche zur Erkennung von Hindernissen eingesetzt werden. Die direkte Verwendung von Radarsensoren zur Erzeugung eines Belegungsgitters wird jedoch dadurch erschwert, dass Radarreflexe häufig auf indirektem Weg, etwa über Leitplankenspiegelungen oder Bodenspiegelungen erzeugt werden. Während bei Verwendung von Videosensoren oder Lidarsensoren entlang eines Sichtstrahls bis zur ersten Reflexion ein Freiraum angenommen werden kann, ist dies für Radarsensoren daher üblicherweise nicht der Fall.

Ein inverses Sensormodell für einen Radarsensor ist bekannt aus C. Galvez et al., "Grid-Based Multi-Sensor Fusion for On-Road Obstacle Detection: Application to Autonomous Driving", 1.1.2015.

### Offenbarung der Erfindung

Die Erfindung stellt ein Verfahren zum Erzeugen eines inversen Sensormodells für eine Radarsensorvorrichtung mit den Merkmalen des Patentanspruchs 1 bereit. Weiter stellt die Erfindung ein Verfahren zum Erkennen von Hindernissen in einem Umfeld eines Fahrzeugs mittels einer Radarsensorvorrichtung mit den Merkmalen des Patentanspruchs 7 bereit. Schließlich stellt die Erfindung eine Vorrichtung zum Erzeugen eines inversen Sensormodells für eine Radarsensorvorrichtung mit den Merkmalen des Patentanspruchs 8 bereit.

Bevorzugte Ausführungsformen sind Gegenstand der jeweiligen Unteransprüche.

Gemäß einem ersten Aspekt stellt die Erfindung demnach ein Verfahren zum Erzeugen eines inversen Sensormodells für eine Radarsensorvorrichtung bereit. Hindernisse mit vorgegebenen Abmessungen und räumlichen Positionen werden in einem Umfeld der Radarsensorvorrichtung angeordnet. Radarmessdaten werden durch die Radarsensorvorrichtung erzeugt. Ein inverses Sensormodell wird unter Verwendung der erzeugten Radarmessdaten und der vorgegebenen Abmessungen und räumlichen Positionen der Hindernisse generiert. Das inverse Sensormodell ordnet hierbei einer Zelle eines Belegungsgitters in Abhängigkeit von vorgegebenen Radarmessdaten eine Belegtheitswahrscheinlichkeit zu.

Gemäß einem zweiten Aspekt betrifft die Erfindung demnach ein Verfahren zum Erkennen von Hindernissen in einem Umfeld eines Fahrzeugs mittels einer Radarsensorvorrichtung, wobei ein inverses Sensormodell der Radarsensorvorrichtung erzeugt wird. Weiter werden Radarmessdaten bezüglich des Umfelds des Fahrzeugs mittels der Radarsensorvorrichtung erzeugt. Weiter wird ein Belegungsgitter generiert, wobei anhand des inversen Sensormodells und unter Verwendung der Radarmessdaten Belegtheitswerte für Zellen des Belegungsgitters ermittelt werden. Hindernisse werden unter Verwendung des Belegungsgitters erkannt.

Gemäß einem dritten Aspekt der Erfindung wird eine Vorrichtung zum Erzeugen eines inversen Sensormodells für eine Radarsensorvorrichtung bereitgestellt. Die Vorrichtung weist eine Schnittstelle auf, welche von der Radarsensorvorrichtung erzeugte Radarmessdaten empfängt. Die Schnittstelle empfängt weiter Informationen bezüglich vorgegebener Abmessungen und räumlicher Positionen von Hindernissen in einem Umfeld der Radarsensorvorrichtung. Die Vorrichtung umfasst weiter eine Recheneinrichtung, welche unter Verwendung der empfangenen Radarmessdaten und der Informationen bezüglich der vorgegebenen Abmessungen und räumlichen Positionen der Hindernisse ein inverses Sensormodell für die Radarsensorvorrichtung generiert. Das inverse Sensormodell ordnet einer Zelle eines Belegungsgitters in Abhängigkeit von vorgegebenen Radarmessdaten eine Belegtheitswahrscheinlichkeit zu.

### Vorteile der Erfindung

Das inverse Sensormodell wird anhand von wohl definierten Trainingsdaten generiert, d. h. anhand von unter bekannten und kontrollierbaren Bedingungen in einem Testszenario erfassten Radarmessdaten. Während der Trainingsphase sind die genaue Lage der Hindernisse relativ zur Radarsensorvorrichtung und die genauen Abmessungen der Hindernisse bekannt. Die erzeugten Radarmessdaten können somit eindeutig dem bekannten Umfeld des Fahrzeugs zugeordnet werden. Anhand dieser bekannten Werte wird das inverse Sensormodell derart eingelernt, dass es anhand des inversen Sensormodells möglich ist, beliebig vorgegebene Radarmessdaten auszuwerten.

Die Erfindung ermöglicht es somit, ein inverses Sensormodell für Radarsensorvorrichtungen zu generieren. Auch die üblicherweise schwierig einzuberechnenden indirekten Reflexionen werden bei der Generierung des inversen Sensormodells berücksichtigt, da diese bereits in den im Trainingsszenario erfassten Radardaten enthalten sind. Die Erfindung erlaubt dadurch die Einbeziehung von Radarsensorvorrichtungen zur Erzeugung von Belegungsgittern.

Gemäß einer bevorzugten Weiterbildung des Verfahrens wird beim Erzeugen der Radarmessdaten die relative Lage der Hindernisse zu der Radarsensorvorrichtung verändert und für die jeweiligen relativen Lagen werden Radarmessdaten erzeugt. Dadurch können verschiedene Szenarien zum Einlernen des inversen Sensormodells berücksichtigt werden. Gemäß einer Ausführungsform wird die Radarsensorvorrichtung durch eine Teststrecke mit aufgebauten Hindernissen hindurch bewegt, wobei im Wesentlichen kontinuierlich oder in bestimmten Zeitabschnitten Radarmessdaten erzeugt werden. Es ist jedoch auch möglich, die Hindernisse relativ zur Radarsensorvorrichtung zu verändern, entweder hinsichtlich der Orientierung oder hinsichtlich des Abstandes bzw. der Position der Hindernisse mit Bezug zur Radarsensorvorrichtung. Die Lagen und Orientierungen der Hindernisse können relativ zueinander verändert werden. Je mehr verschiedene Szenarien berücksichtigt werden, welche sich in der Winkellage, den Entfernungen der Hindernisse und der Form bzw. der Materialien der Hindernisse unterscheiden, desto genauer wird im Allgemeinen das inverse Sensormodell. Insbesondere wird die Genauigkeit der Belegtheitswahrscheinlichkeit für unbekannte Szenarien umso höher, je mehr Trainingsdaten zur Generierung des inversen Sensormodells herangezogen wurden.

Anhand der vorgegebenen Abmessungen und räumlichen Positionen der Hindernisse wird den Zellen eine Belegtheitswertswahrscheinlichkeit zugeordnet und mit den erzeugten Radarmessdaten verknüpft. Die vorgegebenen Abmessungen und räumlichen Positionen können dazu verwendet werden, die exakte Belegung im Umfeld der Radarsensorvorrichtung zu berechnen. Alternativ oder zusätzlich können die Abmessungen und räumlichen Positionen mittels weiterer Sensorvorrichtungen, beispielsweise mittels Kameras oder Lidarvorrichtungen bestimmt und dadurch vorgegeben werden. In jedem Fall sind die Abmessungen und räumlichen Positionen der Hindernisse unabhängig von den Radarmessungen bekannt, d. h. die Abmessungen und Positionen werden ohne Verwendung der Radarmessdaten ermittelt. Da die Abmessungen und räumlichen Positionen bekannt sind, können die Belegtheitswahrscheinlichkeiten für die Testszenarien exakt angegeben werden, d. h. die Belegtheitswahrscheinlichkeiten betragen beispielsweise für jede Zelle 0 oder 1.

Während die Belegtheitswahrscheinlichkeiten für Testszenarien somit exakt bekannt sind, werden die Belegtheitswahrscheinlichkeiten für unbekannte Szenarien, d. h. unbekannte Radarmessdaten durch das inverse Sensormodell berechnet. Gemäß einer Ausführungsform wird das inverse Sensormodell hierzu mittels maschinellen Lernens erzeugt. Das inverse Sensormodell wird unter Verwendung eines neuronalen Netzes erzeugt, wobei die Radarmessdaten und die mit den erzeugten

Radarmessdaten verknüpfen Belegtheitswahrscheinlichkeiten, d. h. die für die Testszenarien ermittelten Werte, als Eingangsdaten des neuronalen Netzes verwendet werden. Besonders bevorzugt kommt ein Convolutional Neural Network (CNN oder ConvNet) zum Generieren des inversen Sensormodells zum Einsatz. Insbesondere werden die Radarmessdaten in Form von Gittern bzw. Grids dargestellt, wobei ein erstes Gitter anhand der Reflexionswerte erzeugt wird, ein zweites Gitter anhand der zugehörigen Radialgeschwindigkeiten erzeugt wird und ein drittes Gitter anhand der ermittelten Radarquerschnitte erzeugt wird. Die ersten bis dritten Gitter werden als Eingangsdaten für das CNN verwendet. Anhand weiterer Eigenschaften der Radarmessungen können weitere Gitter vorgegeben werden. Die Gitter werden mittels des neuronalen Netzes zur Bestimmung des inversen Sensormodells, d. h. zur Zuordnung von Belegtheitswahrscheinlichkeiten zu vorgegebenen Radarmessdaten verwendet.

Gemäß einer bevorzugten Weiterbildung des Verfahrens werden mittels weiterer Sensorvorrichtungen Belegtheitswahrscheinlichkeiten ermittelt, welche als zusätzliche Eingangsdaten des neuronalen Netzes verwendet werden. Die Sensorvorrichtungen können vorzugsweise Lidarsensoren oder Fahrzeugkameras umfassen. Für diese weiteren Sensorvorrichtungen können bekannte Verfahren zur Ermittlung von Belegtheitswahrscheinlichkeiten herangezogen werden. Insbesondere kann die für Lidarsensoren und Fahrzeugkameras der Umstand berücksichtigt werden, dass im Allgemeinen keine indirekten Reflexionen auftreten. Weiter können die Belegtheitswahrscheinlichkeiten durch Bildverarbeitung und Objekterkennung anhand der Sensordaten der zusätzlichen Sensorvorrichtungen bestimmt werden. So kann anhand von Videodaten beispielsweise eine Straßenoberfläche erkannt werden und als befahrbar klassifiziert werden. Die Belegtheitswahrscheinlichkeiten können auch indirekt ermittelt werden, indem aus der Tatsache, dass innerhalb eines Sichtbereichs eines Sensors keine Reflexionen erkannt wird, geschlossen wird, dass mit einer bestimmten Wahrscheinlichkeit auch kein Objekt vorhanden ist. Bei Verwendung einer Lidarvorrichtung können die Belegtheitswahrscheinlichkeiten winkelweise erzeugt werden. Die Belegtheitswahrscheinlichkeiten können unter Berücksichtigung der bisherigen Messhistorie zur Erzeugung eines Belegungsgitters herangezogen werden. Bei Verwendung mehrerer Sensorvorrichtungen können die Sensordaten vor der Berechnung der Belegtheitswahrscheinlichkeiten oder nach der Berechnung der jeweiligen Belegtheitswahrscheinlichkeiten fusioniert werden.

Gemäß einer bevorzugten Weiterbildung werden neben den Testszenarien auch Messwerte von realen Fahrten berücksichtigt. Die entsprechenden Abmessungen und räumlichen Positionen der Hindernisse können anhand weiterer Sensordaten bereitgestellt werden.

Gemäß einer bevorzugten Weiterbildung des Verfahrens wird beim Generieren des inversen Sensormodells eine Reichweite der Radarsensorvorrichtung berücksichtigt, welche anhand der erzeugten Radarmessdaten und der vorgegebenen Abmessungen und räumlichen Positionen der Hindernisse ermittelt wird. Falls sich bei einem Testszenario ein Hindernis einer bestimmten Größe in einer bestimmten Entfernung befindet, jedoch keine entsprechenden Radarreflexe ermittelt werden, kann darauf geschlossen werden, dass das Hindernis außerhalb der Reichweite der Radarsensorvorrichtung liegt. Im Allgemeinen wird die Reichweite der Radarsensorvorrichtung kein festgesetzter Wert sein, sondern ein kontinuierlicher Übergangsbereich sein, innerhalb welchem die Erkennungsgenauigkeit der Radarsensorvorrichtung abnimmt und im Wesentlichen gegen Null geht. Die Reichweite kann beispielsweise dadurch berücksichtigt werden, dass Zellen des Belegungsgitters, welche Regionen entsprechen, die sich außerhalb der Reichweite der Radarsensorvorrichtung befinden, eine Belegtheitswahrscheinlichkeit von 1/2 zugeordnet wird.

Gemäß einer bevorzugten Weiterbildung des Verfahrens umfassen die zum Generieren des inversen Sensormodells ausgewerteten Radarmessdaten Radarquerschnitte und Winkelwahrscheinlichkeiten.

### Kurze Beschreibung der Zeichnungen

Es zeigen:
- Figur 1: ein schematisches Blockschaltbild einer Vorrichtung zum Erzeugen eines inversen Sensormodells;
- Figur 2: eine schematische Draufsicht auf ein Testszenario;
- Figur 3: eine beispielhafte Abstandsabhängigkeit einer Belegtheitswahrscheinlichkeit für ein Testszenario;
- Figur 4: eine beispielhafte Abstandsabhängigkeit einer Belegtheitswahrscheinlichkeit für ein beliebig vorgegebenes Umfeldszenario;
- Figur 5: eine beispielhafte Abstandsabhängigkeit einer Belegtheitswahrscheinlichkeiten bei einer Abwesenheit von Radarreflexen;
- Figur 6: ein beispielhaftes Belegungsgitter; und
- Figur 7: ein Flussdiagramm eines Verfahrens zum Erzeugen eines inversen Sensormodells bzw. zum Erkennen von Hindernissen.

In allen Figuren sind gleiche bzw. funktionsgleiche Elemente und Vorrichtungen mit denselben Bezugszeichen versehen.

### Beschreibung der Ausführungsbeispiele

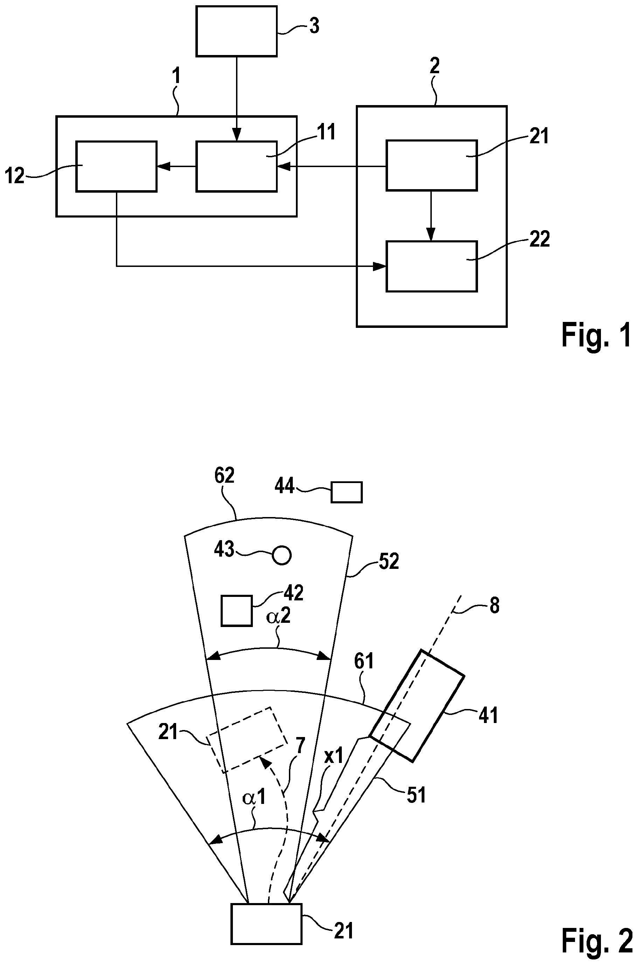

In Figur 1 ist ein schematisches Blockdiagramm einer Vorrichtung 1 zum Erzeugen eines inversen Sensormodells für eine Radarsensorvorrichtung 21 illustriert. Die Radarsensorvorrichtung 21 kann eine Vielzahl einzelner Sendeempfängervorrichtungen aufweisen, welche dazu ausgebildet sind, Radarwellen auszusenden und die reflektierten Radarwellen zu empfangen.

Die Radarsensorvorrichtung 21 ist vorzugsweise in ein Fahrzeug 2 integriert. Die Radarsensorvorrichtung 21 führt Radarmessungen durch und erzeugt entsprechende Radarmessdaten, welche über eine Signalverbindung an eine Schnittstelle 11 der Vorrichtung 1 übertragen werden. Die Schnittstelle 11 der Vorrichtung 1 ist weiter mit einer externen Rechenvorrichtung 3 gekoppelt, welche die genauen räumlichen Positionen und Abmessungen von Hindernissen in einem Umfeld der Radarsensorvorrichtung 21 an die Schnittstelle 11 überträgt. Die räumlichen Positionen können zweidimensionale oder dreidimensionale Ortskoordinaten umfassen, welche insbesondere relativ zur Position der Radarsensorvorrichtung 21 angegeben werden können. Die Abmessungen können die genauen räumlichen Dimensionen sowie die exakte Form der Hindernisse umfassen. Weiter können Informationen bezüglich einer Materialbeschaffenheit der Hindernisse von der Rechenvorrichtung 3 an die Schnittstelle 11 übertragen werden.

Bei den Hindernissen kann es sich um beliebige Objekte handeln, welche Radarwellen reflektieren, beispielsweise Fahrzeuge, Personen, Leitplanken, Gebäudeteile, Bäume oder Sträucher. Die Informationen über die Hindernisse, d. h. insbesondere die räumlichen Positionen, Abmessungen und gegebenenfalls Materialeigenschaften, können über eine Benutzerschnittstelle von einem Benutzer eingegeben werden und auf einem Speicher der Rechenvorrichtung 3 abgelegt werden. Zusätzlich oder alternativ kann die Rechenvorrichtung 3 mit weiteren Sensoren verknüpft sein, welche die Informationen über die Hindernisse ermitteln. Beispielweise können die zusätzlichen Sensoren Kameras oder Lidarsensoren umfassen.

Die über die Schnittstelle 11 empfangenen Informationen bezüglich der Hindernisse sowie die empfangenen Radarmessdaten werden an eine Recheneinrichtung 12 übertragen, welche dazu ausgebildet ist, diese Daten weiter zu verarbeiten.

Die Recheneinrichtung 12 sowie die Rechenvorrichtung 3 können einen oder mehrere Mikroprozessoren zur Verarbeitung der Daten und zur Durchführung der Rechenoperationen umfassen.

Die Recheneinrichtung 12 berechnet anhand der empfangenen Radarmessdaten und anhand der Informationen bezüglich der vorgegebenen Abmessungen und räumlichen Positionen der Hindernisse ein inverses Sensormodell für die Radarsensorvorrichtung 21.

Unter einem inversen Sensormodell wird ein Baustein verstanden, welcher zur Erzeugung eines Belegungsgitters einsetzbar ist. Jeder Zelle des Belegungsgitters wird in Abhängigkeit von vorgegebenen aktuellen Radarmessdaten eine Belegtheitswahrscheinlichkeit zugeordnet. Die Belegtheitswahrscheinlichkeit entspricht der Wahrscheinlichkeit, mit welcher bei Vorliegen der aktuellen Radarmessdaten die entsprechende Zelle belegt ist. Anhand der Belegtheitswahrscheinlichkeit kann ein Belegtheitswert der Zelle ermittelt werden. Der Belegtheitswert kann vorzugsweise ein binärer Wert mit den Werten "belegt" oder 1 und "frei" oder 0 annehmen. Der Belegtheitswert kann auch ein ternärer Wert sein, welcher zusätzlich einen Wert "unbekannt" annehmen kann und beispielsweise durch den Wert 1/2 repräsentiert werden kann. Gemäß weiteren Ausführungsformen kann der Belegtheitswert kontinuierliche Werte zwischen 0 und 1 annehmen.

Das Belegungsgitter selbst kann vorzugsweise ein symmetrisches Gitter sein, wobei jeder Zelle der berechnete Belegungswert zugeordnet wird. Üblicherweise modelliert das Belegungsgitter das Umfeld des Fahrzeugs, ist also relativ zu ortsfesten Elementen im Umfeld des Fahrzeugs fixiert. Das bedeutet, dass sich das Fahrzeug selbst sowie weitere dynamische Objekte durch das Belegungsgitter bewegen. Während der Bewegung des Fahrzeugs 2 werden neue Sensordaten erzeugt, welche zur Aktualisierung des Belegungsgitters, d. h. zur dynamischen Anpassung der Belegungswerte der Zellen des Belegungsgitters herangezogen werden. Insbesondere können anhand des generierten inversen Sensormodells anhand der aktuellen Radarmessdaten die entsprechenden Belegtheitswahrscheinlichkeiten von Zellen des Belegungsgitters bestimmt werden. Die Belegtheitswahrscheinlichkeiten können zur dynamischen Anpassung der Belegtheitswerte der Zellen herangezogen werden. Insbesondere kann mittels einer rekursiven Aktualisierungsgleichung, welche als binärer Bayes-Filter bezeichnet wird, die A-Posteriori-Wahrscheinlichkeit für jede Zelle berechnet werden, d. h. unter Berücksichtigung der gesamten Messhistorie. Gemäß einer Ausführungsform können hierzu die einzelnen Zellen als voneinander bedingt unabhängig angenommen werden.

Das Belegungsgitter ermöglicht eine flächige Beschreibung des Umfelds, wobei sowohl die Hindernisse im Umfeld des Fahrzeugs als auch befahrbare Flächen erkannt werden. Das Belegungsgitter ermöglicht somit eine Freiraummodellierung bzw. Freibereichsmodellierung.

Das generierte inverse Sensormodell kann an ein Fahrassistenzsystem 22 übermittelt werden, welches mittels erfasster Radarmesswerte anhand des inversen Sensormodells Hindernisse erkennt und das Fahrzeug 2 teilautonom oder autonom steuert.

Das Generieren des inversen Sensormodells durch die Recheneinrichtung 12 wird im Folgenden genauer illustriert.

In Figur 2 ist ein beispielhaftes Testszenario illustriert, d. h. eine Positionierung der Radarsensorvorrichtung 21 in einem Umfeld mit vorgegebenen Hindernissen 41 bis 44. Vorzugsweise bewegt sich die Radarsensorvorrichtung 21 entlang eines vorgegebenen Pfades 7, wobei zu jedem Zeitpunkt die genaue Lage der Hindernisse 41 bis 44 relativ zur Radarsensorvorrichtung 21 von der Rechenvorrichtung 3 ermittelt wird und an die Vorrichtung 1 übertragen wird. Die Radarsensorvorrichtung 21 ermittelt Radarmessdaten in einem Nahbereich 51 und Radarmessdaten in einem Fernbereich 52, wobei die erfassten Bereiche durch jeweilige Erfassungswinkel α1, α2 und Reichweiten 61, 62 gekennzeichnet sind. Den jeweiligen Radarmessdaten werden die entsprechenden Informationen bezüglich der Hindernisse 41 bis 44 zugeordnet. Die Radarmessdaten umfassen die Gesamtheit aller Radarreflexe (Locations) sowie deren Eigenschaften, insbesondere die entsprechenden Winkelwahrscheinlichkeiten und Radarquerschnitte.

Unter Verwendung der Abmessungen und räumlichen Positionen der Hindernisse kann die Recheneinrichtung 12 den jeweiligen Radarmessdaten die entsprechenden Belegtheitswahrscheinlichkeiten der Zellen des Belegungsgitters zuweisen.

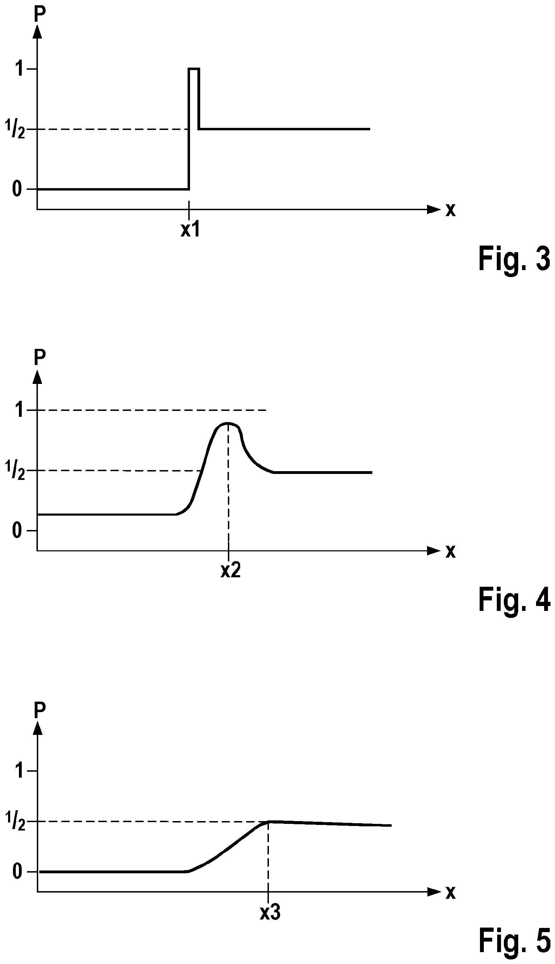

In Figur 3 ist dies beispielhaft für die Zellen eines Belegungsgitters entlang einer Sichtlinie 8 illustriert. Für Abstände x kleiner als ein Abstand x1 zu einem ersten Hindernis 41 ist die Belegtheitswahrscheinlichkeit gleich 0. Für die Zelle, welche sich entlang der Sichtlinie 8 in einem Abstand x1 von der Radarsensorvorrichtung 21 befindet, beträgt die Belegtheitswahrscheinlichkeit 1, da sich an diesem Ort mit Sicherheit ein Hindernis 41 befindet. Da die weiter entfernt befindlichen Bereiche von dem Hindernis 41 verdeckt werden, kann über diese Bereiche keine Aussage getroffen werden. Entsprechend kann der Belegtheitswahrscheinlichkeit ein Wert 1/2 zugeordnet werden.

Für jede der empfangenen Radarmessdaten berechnet die Recheneinrichtung 12 unter Verwendung der Informationen über die Hindernisse 41 bis 44 analog zu diesem Beispiel die Belegtheitswahrscheinlichkeiten für sämtliche Zellen des Belegungsgitters. Diese ermittelten Belegtheitswahrscheinlichkeiten bilden Eingangsdaten für ein neuronales Netz, mittels welchem die Recheneinrichtung 12 das inverse Sensormodell berechnet. Weitere Eingangsdaten für das neuronale Netz können zusätzliche Sensordaten von Fahrzeugkameras oder Lidarsensoren sein. Mittels des inversen Sensormodells können beliebige Radarmessdaten ausgewertet werden und den Zellen des Belegungsgitters kann eine jeweilige entsprechende Belegtheitswahrscheinlichkeit zugeordnet werden.

In Figur 4 ist dies für ein beispielhaftes Szenario entlang einer bestimmten Sichtlinie illustriert. Die Belegtheitswahrscheinlichkeit nimmt für allgemeine Szenarien nicht nur die Werte 0, 1/2 und 1 an, sondern nimmt im Allgemeinen beliebige Werte zwischen 0 und 1 an. So ist aufgrund von möglichen Messungenauigkeiten und aufgrund von Rauschen auch bei der Abwesenheit von Reflexionen die Wahrscheinlichkeit im Allgemeinen ungleich 0 und auch beim Empfangen einer Reflexion ist die genaue Position x2 im Allgemeinen nicht bekannt, sondern die Belegtheitswahrscheinlichkeit wird im Allgemeinen kontinuierlich auf einen Wert nahe 1 ansteigen. Für größere Abstände fällt der Wert im Wesentlichen auf 1/2, da wiederum keine Aussagen über die Belegtheit getroffen werden können.

In Figur 5 ist eine weitere beispielhafte Abstandsabhängigkeit einer mittels des inversen Sensormodells bestimmten Belegtheitswahrscheinlichkeit illustriert. In diesem Fall werden entlang der untersuchten Sichtlinie im Wesentlichen keine oder nur wenige Radarreflexe empfangen. Die Belegtheitswahrscheinlichkeiten beträgt daher für kleinere Abstände im Wesentlichen Null. Die Belegtheitswahrscheinlichkeit wird jedoch vergrößere Abstände anwachsen und jenseits eine Reichweite x3 der Radarsensorvorrichtung 21 wiederum den Wert 1/2 annehmen, da für diesen Abstandsbereich keine Aussage getroffen haben kann.

Die Reichweite x3 der Radarsensorvorrichtung 21 kann beim Generieren des inversen Sensormodells Bilk Rücksicht werden. So wird beispielsweise das in der Figur 2 illustrierte Hindernis 44 nicht erkannt, da es außerhalb der Reichweite der Radarsensorvorrichtung 21 liegt. Erst bei einer Annäherung der Radarsensorvorrichtung 21 entlang des Pfades 7 bewegt sich das Hindernis 44 in den Erfassungsbereich der Radarsensorvorrichtung 21 hinein. Beim Generieren des inversen Sensormodells durch maschinelles Lernen, etwa durch Verwendung tiefer neuronalen Netze werden derartige Szenarien ebenfalls mit eingelernt.

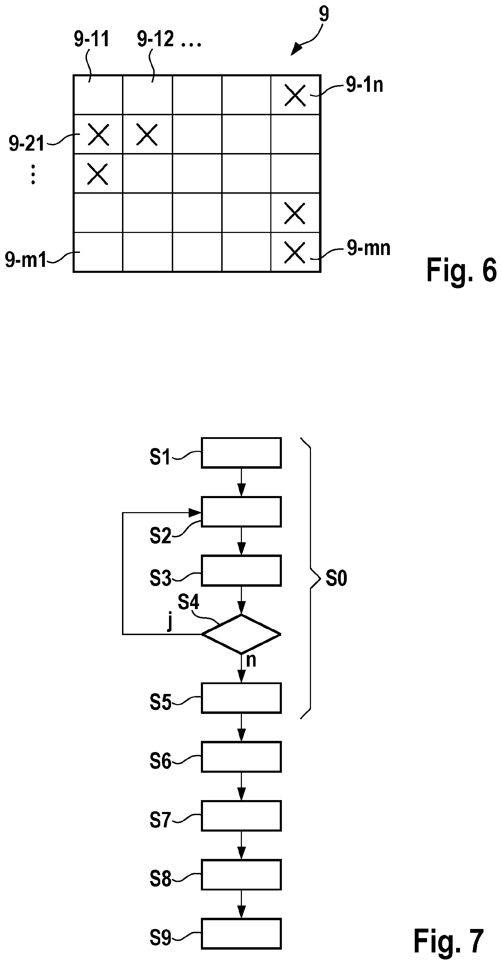

In Figur 6 ein beispielhaftes Belegungsgitter 9 illustriert, welches mittels des generierten inversen Sensormodells erzeugt werden kann. Das Belegungsgitter 9 wird dynamisch aktualisiert, indem neu erzeugte Radarmessdaten mittels des inversen Sensormodells zur Bestimmung von Belegtheitswahrscheinlichkeiten ausgewertet werden und die Belegtheitswerte anhand der ermittelten Belegtheitswahrscheinlichkeiten aktualisiert werden. Mittels Bayescher Filter kann beispielsweise ein neuer Belegtheitswert ermittelt werden. Den einzelnen Zellen 9-11 bis 9-mn des Belegungsgitters 9, wobei m und n natürliche Zahlen sind, wird entsprechend ein Belegtheitswert von 0 (frei) oder 1 (belegt, durch Kreuze gekennzeichnet) zugewiesen. Der Belegtheitswert einer Zelle 9-ij wird sich insbesondere ändern, wenn neue Messungen hohe Belegtheitswahrscheinlichkeiten der entsprechenden Zelle 9-ij ergeben.

Die Belegtheitswahrscheinlichkeiten können mit anhand von weiteren Sensordaten erfassten weiteren Belegtheitswahrscheinlichkeiten fusioniert werden die weiteren Sensordaten können beispielsweise anhand von Fahrzeugkameras oder Lidarsensoren erzeugt werden, sodass eine genauere Ermittlung der Belegtheitswahrscheinlichkeiten möglich ist.

In Figur 7 ist ein Flussdiagramm eines Verfahrens zum Erzeugen eines inversen Sensormodells für eine Radarsensorvorrichtung 21 sowie eines Verfahrens zum Erkennen von Hindernissen illustriert. Das Verfahren S0 zum Erzeugen eines inversen Sensormodells umfasst Verfahrensschritte S1 bis S5, wobei das Verfahren zum Erkennen von Hindernissen zusätzliche Verfahrensschritte S6 bis S9 aufweist.

In einem ersten Verfahrensschritt S 1 werden Hindernisse 41 bis 44 in einem Umfeld der Radarsensorvorrichtung 21 positioniert. Informationen bezüglich der Abmessungen, räumlichen Positionen und gegebenenfalls der verwendeten Materialien bzw. Reflexionseigenschaften der Hindernisse 41 bis 44 werden ermittelt. Diese Informationen können mittels zusätzlicher Sensorvorrichtungen generiert werden. Alternativ können die Hindernisse 41 bis 44 derart positioniert werden, dass deren räumliche Positionen bekannt sind. Die entsprechenden Informationen können manuell von einem Benutzer an eine Vorrichtung 1 zum Generieren des Umfeldmodells übertragen werden.

Die Radarsensorvorrichtung 21 erzeugt in einem Verfahrensschritt S2 Radarmessdaten. Vorzugsweise wird hierzu die Radarsensorvorrichtung 21 relativ zu den Hindernissen 41 bis 44 bewegt, wobei zu jedem Erfassungszeitpunkt die entsprechende relative Orientierung zwischen den Hindernissen 41 bis 44 und der Radarsensorvorrichtung 21 bekannt ist. Alternativ oder zusätzlich können auch die Hindernisse 41 bis 44 relativ zur Radarsensorvorrichtung 21 bewegt werden.

In einem Verfahrensschritt S3 wird unter Verwendung der erzeugten Radarmessdaten und der vorgegebenen Informationen, d. h. insbesondere der Abmessungen und räumlichen Positionen der Hindernisse 41 bis 44, ein inverses Sensormodell erzeugt. Das inverse Sensormodell kann insbesondere durch eine oben beschriebene Recheneinrichtung 12 nach einer der oben beschriebenen Methoden erzeugt werden.

So können insbesondere den Zellen 9-ij des Belegungsgitters 9 anhand der Informationen über die Hindernisse 41 bis 44 Belegtheitswahrscheinlichkeiten zugeordnet werden und diese mit den entsprechenden Radarmessdaten verknüpft werden. Diese verknüpften Daten werden als Eingangsdaten des neuronalen Netzes verwendet. Zusätzlich können weitere Sensordaten als Eingangsdaten des neuronalen Netzes verwendet werden. Mittels des neuronalen Netzes wird das inverse Sensormodell erzeugt, welches in Abhängigkeit von beliebig vorgegebenen Radarmessdaten der Zellen 9-ij des Belegungsgitters 9 eine entsprechende Belegtheitswahrscheinlichkeit zuordnet.

In einem Verfahrensschritt S4 wird überprüft, ob weitere Radarmessdaten zum Generieren und Anpassen des inversen Sensormodells berücksichtigt werden sollen. Gegebenenfalls werden neue Radarmessdaten erzeugt, S2, und das inverse Sensormodell wird entsprechend angepasst, S3. Insbesondere können mittels des neuronalen Netzes unter Verwendung der neuen Daten die Parameter des inversen Sensormodells angepasst werden.

Falls keine weiteren Radarmessdaten berücksichtigt werden sollen, wird in einem Verfahrensschritt S5 das generierte inverse Sensormodell ausgegeben.

In weiteren optionalen Schritten S6 bis S9 kann das generierte inverse Sensormodell zum Erkennen von Hindernissen 41 bis 44 in einem Umfeld des Fahrzeugs 2 eingesetzt werden.

Hierzu werden in einem Verfahrensschritt S6 mittels einer Radarsensorvorrichtung 21, welche identisch oder baugleich mit der in den Schritten S1 bis S5 verwendeten Radarsensorvorrichtung 21 ist, Radarmessdaten erzeugt.

In einem Verfahrensschritt S7 wird ein Belegungsgitter generiert bzw. aktualisiert, wobei anhand des inversen Sensormodells unter Verwendung der Radarmessdaten als Eingangsdaten Belegtheitswahrscheinlichkeiten für Zellen 9-ij des Belegungsgitters 9 ermittelt werden. Die Belegtheitswahrscheinlichkeiten werden weiter dazu verwendet, die Belegtheitswerte der Zellen 9-ij des Belegungsgitters 9 zu erzeugen oder, falls diese bereits vorhanden sind, zu aktualisieren.

In einem Verfahrensschritt S8 werden Hindernisse 41 bis 44 unter Verwendung des Belegungsgitters 9 erkannt. Die Hindernisse 41 bis 44 entsprechen denjenigen Bereichen, welche belegt sind, d. h. die entsprechenden Zellen 9-ij des Belegungsgitters 9 einen Belegtheitswert von 1 aufweisen.

Weiter kann in einem optionalen Verfahrensschritt S9 eine Steuerung von Fahrfunktionen des Fahrzeugs 2 anhand der erkannten Hindernisse 41 bis 44 durchgeführt werden. Insbesondere kann das Fahrzeug 2 beschleunigt oder abgebremst werden, oder es kann die Fahrtrichtung des Fahrzeugs angepasst werden.

## Patentansprüche

1. Verfahren zum Erzeugen eines inversen Sensormodells für eine Radarsensorvorrichtung (21), mit den Schritten:
Anordnen (S1) von Hindernissen (41 bis 44) mit vorgegebenen Abmessungen und räumlichen Positionen in einem Umfeld der Radarsensorvorrichtung (21);
Erzeugen (S2) von Radarmessdaten durch die Radarsensorvorrichtung (21); und
Generieren (S3) des inversen Sensormodells unter Verwendung der erzeugten Radarmessdaten und der vorgegebenen Abmessungen und räumlichen Positionen der Hindernisse (41 bis 44), wobei das inverse Sensormodell einer Zelle (9-ij) eines Belegungsgitters (9) in Abhängigkeit von vorgegebenen Radarmessdaten eine Belegtheitswahrscheinlichkeit zuordnet,
wobei anhand der vorgegebenen Abmessungen und räumlichen Positionen der Hindernisse den Zellen (9-ij) eine Belegtheitswahrscheinlichkeit zugeordnet wird und mit den erzeugten Radarmessdaten verknüpft wird,
**dadurch gekennzeichnet, dass**
das inverse Sensormodell mittels eines neuronalen Netzes erzeugt wird, wobei die Radarmessdaten und die mit den erzeugten Radarmessdaten verknüpften Belegtheitswahrscheinlichkeiten als Eingangsdaten des neuronalen Netzes verwendet werden, und
die als Eingangsdaten des neuronalen Netzes verwendeten Radarmessdaten in Form von Gittern dargestellt werden, wobei die Gitter ein erstes Gitter umfassen, welches anhand von Reflexionswerten erzeugt wird, ein zweites Gitter umfassen, welches anhand von zugehörigen Radialgeschwindigkeiten erzeugt wird, und ein drittes Gitter umfassen, welches anhand von ermittelten Radarquerschnitten erzeugt wird.

2. Verfahren nach Anspruch 1, wobei beim Erzeugen der Radarmessdaten die relative Lage der Hindernisse (41 bis 44) zu der Radarsensorvorrichtung (21) verändert wird und für die jeweiligen relativen Lagen Radarmessdaten erzeugt werden.

3. Verfahren nach Anspruch 1 oder 2, wobei mittels weiterer Sensorvorrichtungen Belegtheitswahrscheinlichkeiten der Zellen (9-ij) des Belegungsgitters (9) ermittelt werden, welche als zusätzliche Eingangsdaten des neuronalen Netzes verwendet werden.

4. Verfahren nach Anspruch 3, wobei die weiteren Sensorvorrichtungen Lidarsensoren oder Fahrzeugkameras umfassen.

5. Verfahren nach einem der vorangehenden Ansprüche, wobei beim Generieren des inversen Sensormodells eine Reichweite (x3) der Radarsensorvorrichtung (21) berücksichtigt wird, welche anhand der erzeugten Radarmessdaten und der vorgegebenen Abmessungen und räumlichen Positionen der Hindernisse (41 bis 44) ermittelt wird.

6. Verfahren nach einem der vorangehenden Ansprüche, wobei die zum Generieren des inversen Sensormodells ausgewerteten Radarmessdaten Radarquerschnitte und Winkelwahrscheinlichkeiten umfassen.

7. Verfahren zum Erkennen von Hindernissen (41 bis 44) in einem Umfeld eines Fahrzeugs (2) mittels einer Radarsensorvorrichtung (21), mit den Schritten:
Erzeugen (S0) eines inversen Sensormodells der Radarsensorvorrichtung (21) gemäß einem der Ansprüche 1 bis 6;
Erzeugen (S6) von Radarmessdaten bezüglich des Umfelds des Fahrzeugs (2) mittels der Radarsensorvorrichtung (21);
Generieren (S7) eines Belegungsgitters (9), wobei anhand des inversen Sensormodells unter Verwendung der Radarmessdaten Belegtheitswerte für Zellen des Belegungsgitters (9) ermittelt werden; und
Erkennen (S8) von Hindernissen (41 bis 44) unter Verwendung des Belegungsgitters (9).

8. Vorrichtung (1) zum Erzeugen eines inversen Sensormodells für eine Radarsensorvorrichtung (21), mit:
einer Schnittstelle (11), welche dazu ausgebildet ist, von der Radarsensorvorrichtung (21) erzeugte Radarmessdaten und Informationen bezüglich vorgegebener Abmessungen und räumlicher Positionen von Hindernissen (41 bis 44) in einem Umfeld der Radarsensorvorrichtung (21) zu empfangen; und
einer Recheneinrichtung (12), welche dazu ausgebildet ist, unter Verwendung der empfangenen Radarmessdaten und Informationen bezüglich der vorgegebenen Abmessungen und räumlichen Positionen der Hindernisse (41 bis 44) ein inverses Sensormodell für die Radarsensorvorrichtung (21) zu generieren, wobei das inverse Sensormodell einer Zelle (9-ij) eines Belegungsgitters (9) in Abhängigkeit von vorgegebenen Radarmessdaten eine Belegtheitswahrscheinlichkeit zuordnet,
wobei die Recheneinrichtung (12) dazu ausgebildet ist, anhand der vorgegebenen Abmessungen und räumlichen Positionen der Hindernisse den Zellen (9-ij) eine Belegtheitswahrscheinlichkeit zuzuordnen und mit den erzeugten Radarmessdaten zu verknüpfen,
**dadurch gekennzeichnet, dass** die Recheneinrichtung (12) dazu ausgebildet ist, das inverse Sensormodell mittels eines neuronalen Netzes zu erzeugen, wobei die Radarmessdaten und die mit den erzeugten Radarmessdaten verknüpften Belegtheitswahrscheinlichkeiten als Eingangsdaten des neuronalen Netzes verwendet werden, wobei die Recheneinrichtung (12) dazu ausgebildet ist, die als Eingangsdaten des neuronalen Netzes verwendeten Radarmessdaten in Form von Gittern darzustellen, wobei die Gitter ein erstes Gitter umfassen, welches anhand von Reflexionswerten erzeugt wird, ein zweites Gitter umfassen, welches anhand von zugehörigen Radialgeschwindigkeiten erzeugt wird, und ein drittes Gitter umfassen, welches anhand von ermittelten Radarquerschnitten erzeugt wird.

## Claims

1. Method for generating an inverse sensor model for a radar sensor apparatus (21), having the steps of:
arranging (S1) obstacles (41 to 44) with predefined dimensions and spatial positions in an environment of the radar sensor apparatus (21);
generating (S2) radar measurement data by means of the radar sensor apparatus (21); and
generating (S3) the inverse sensor model using the generated radar measurement data and the predefined dimensions and spatial positions of the obstacles (41 to 44), wherein the inverse sensor model assigns an occupancy probability to a cell (9-ij) of an occupancy grid (9) on the basis of predefined radar measurement data,
wherein an occupancy probability is assigned to the cells (9-ij) on the basis of the predefined dimensions and spatial positions of the obstacles and is linked to the generated radar measurement data,
**characterized in that**
the inverse sensor model is generated using a neural network, wherein the radar measurement data and the occupancy probabilities linked to the generated radar measurement data are used as input data of the neural network, and
the radar measurement data used as input data of the neural network are represented in the form of grids, wherein the grids comprise a first grid which is generated on the basis of reflection values, a second grid which is generated on the basis of associated radial speeds, and a third grid which is generated on the basis of determined radar cross sections.

2. Method according to Claim 1, wherein the relative position of the obstacles (41 to 44) with respect to the radar sensor apparatus (21) is changed when generating the radar measurement data, and radar measurement data are generated for the respective relative positions.

3. Method according to Claim 1 or 2, wherein occupancy probabilities of the cells (9-ij) of the occupancy grid (9) are determined by means of further sensor apparatuses and used as additional input data of the neural network.

4. Method according to Claim 3, wherein the further sensor apparatuses comprise lidar sensors or vehicle cameras.

5. Method according to one of the preceding claims, wherein a range (x3) of the radar sensor apparatus (21), which is determined on the basis of the generated radar measurement data and the predefined dimensions and spatial positions of the obstacles (41 to 44), is taken into account when generating the inverse sensor model.

6. Method according to one of the preceding claims, wherein the radar measurement data evaluated for the purpose of generating the inverse sensor model comprise radar cross sections and angle probabilities.

7. Method for identifying obstacles (41 to 44) in an environment of a vehicle (2) by means of a radar sensor apparatus (21), having the steps of:
generating (S0) an inverse sensor model of the radar sensor apparatus (21) according to one of Claims 1 to 6;
generating (S6) radar measurement data relating to the environment of the vehicle (2) by means of the radar sensor apparatus (21);
generating (S7) an occupancy grid (9), wherein occupancy values for cells of the occupancy grid (9) are determined on the basis of the inverse sensor model using the radar measurement data; and
identifying (S8) obstacles (41 to 44) using the occupancy grid (9).

8. Apparatus (1) for generating an inverse sensor model for a radar sensor apparatus (21), having:
an interface (11) which is designed to receive radar measurement data generated by the radar sensor apparatus (21) and information relating to predefined dimensions and spatial positions of obstacles (41 to 44) in an environment of the radar sensor apparatus (21); and
a computing device (12) which is designed to generate an inverse sensor model for the radar sensor apparatus (21) using the received radar measurement data and information relating to the predefined dimensions and spatial positions of the obstacles (41 to 44), wherein the inverse sensor model assigns an occupancy probability to a cell (9-ij) of an occupancy grid (9) on the basis of predefined radar measurement data,
wherein the computing device (12) is designed to assign an occupancy probability to the cells (9-ij) on the basis of the predefined dimensions and spatial positions of the obstacles and to link it to the generated radar measurement data,
**characterized in that** the computing device (12) is designed to generate the inverse sensor model by means of a neural network, wherein the radar measurement data and the occupancy probabilities linked to the generated radar measurement data are used as input data of the neural network, wherein the computing device (12) is designed to represent the radar measurement data used as input data of the neural network in the form of grids, wherein the grids comprise a first grid which is generated on the basis of reflection values, a second grid which is generated on the basis of associated radial speeds, and a third grid which is generated on the basis of determined radar cross sections.

## Revendications

1. Procédé permettant de générer un modèle de capteur inverse pour un dispositif de capteur radar (21), comprenant les étapes consistant à :
disposer (S1) des obstacles (41 à 44) ayant des dimensions et des positions spatiales prédéfinies dans un environnement du dispositif de capteur radar (21) ;
générer (S2) des données de mesure radar par le dispositif de capteur radar (21) ; et
générer (S3) le modèle de capteur inverse en utilisant les données de mesure radar générées et les dimensions et les positions spatiales prédéfinies des obstacles (41 à 44), dans lequel le modèle de capteur inverse attribue à une cellule (9-ij) d'une grille d'occupation (9) une probabilité d'occupation en fonction de données de mesure radar prédéfinies,
dans lequel une probabilité d'occupation est attribuée aux cellules (9-ij) à l'aide des dimensions et des positions spatiales prédéfinies des obstacles, et est associée aux données de mesure radar générées,
**caractérisé en ce que**
le modèle de capteur inverse est généré au moyen d'un réseau neuronal, dans lequel les données de mesure radar et les probabilités d'occupation associées aux données de mesure radar générées sont utilisées comme des données d'entrée du réseau neuronal, et
les données de mesure radar utilisées comme des données d'entrée du réseau neuronal sont représentées sous forme de grilles, dans lequel les grilles comprennent une première grille qui est générée à l'aide de valeurs de réflexion, comprennent une deuxième grille qui est générée à l'aide de vitesses radiales associées, et comprennent une troisième grille qui est générée à l'aide de surfaces équivalentes radar déterminées.

2. Procédé selon la revendication 1, dans lequel, lors de la génération des données de mesure radar, la position relative des obstacles (41 à 44) par rapport au dispositif de capteur radar (21) est modifiée, et des données de mesure radar sont générées pour les positions relatives respectives.

3. Procédé selon la revendication 1 ou 2, dans lequel d'autres dispositifs de capteur permettent de déterminer des probabilités d'occupation des cellules (9-ij) de la grille d'occupation (9) qui sont utilisées comme des données d'entrée supplémentaires du réseau neuronal.

4. Procédé selon la revendication 3, dans lequel les dispositifs de capteur supplémentaires comprennent des capteurs lidar ou des caméras de véhicule.

5. Procédé selon l'une quelconque des revendications précédentes, dans lequel, lors de la génération du modèle de capteur inverse, une portée (x3) du dispositif de capteur radar (21) est prise en compte qui est déterminée à l'aide des données de mesure radar générées et des dimensions et positions spatiales prédéfinies des obstacles (41 à 44).

6. Procédé selon l'une quelconque des revendications précédentes, dans lequel les données de mesure radar évaluées pour générer le modèle de capteur inverse comprennent des surfaces équivalentes radar et des probabilités angulaires.

7. Procédé permettant de reconnaître des obstacles (41 à 44) dans un environnement d'un véhicule (2) au moyen d'un dispositif de capteur radar (21), comprenant les étapes consistant à :
générer (S0) un modèle de capteur inverse du dispositif de capteur radar (21) selon l'une quelconque des revendications 1 à 6 ;
générer (S6) des données de mesure radar concernant l'environnement du véhicule (2) au moyen du dispositif de capteur radar (21) ;
générer (S7) une grille d'occupation (9), dans lequel, à l'aide du modèle de capteur inverse, en utilisant les données de mesure radar, des valeurs d'occupation sont déterminées pour des cellules de la grille d'occupation (9) ; et
reconnaître (S8) des obstacles (41 à 44) en utilisant la grille d'occupation (9).

8. Dispositif (1) permettant de générer un modèle de capteur inverse pour un dispositif de capteur radar (21), comprenant :
une interface (11) qui est réalisée pour recevoir des données de mesure radar générées par le dispositif de capteur radar (21) et des informations concernant des dimensions et positions spatiales prédéfinies des obstacles (41 à 44) dans un environnement du dispositif de capteur radar (21) ; et
un moyen de calcul (12) qui est réalisé, en utilisant les données de mesure radar reçues et les informations concernant les dimensions et positions spatiales prédéfinies des obstacles (41 à 44), pour générer un modèle de capteur inverse pour le dispositif de capteur radar (21), dans lequel le modèle de capteur inverse attribue à une cellule (9-ij) de la grille d'occupation (9) une probabilité d'occupation en fonction de données de mesure radar prédéfinies,
dans lequel le moyen de calcul (12) est réalisé pour attribuer aux cellules (9-ij) une probabilité d'occupation à l'aide des dimensions et positions spatiales prédéfinies des obstacles, et pour l'associer aux données de mesure radar générées,
**caractérisé en ce que** le moyen de calcul (12) est réalisé pour générer le modèle de capteur inverse au moyen d'un réseau neuronal, dans lequel les données de mesure radar et les probabilités d'occupation associées aux données de mesure radar générées sont utilisées comme des données d'entrée du réseau neuronal, dans lequel le moyen de calcul (12) est réalisé pour représenter les données de mesure de radar utilisées comme des données d'entrée du réseau neuronal sous la forme de grilles, dans lequel les grilles comprennent une première grille qui est générée à l'aide de valeurs de réflexion, comprennent une deuxième grille qui est générée à l'aide de vitesses radiales associées, et comprennent une troisième grille qui est générée à l'aide de surfaces équivalentes radar déterminées.
